# EUROPÄISCHE PATENTSCHRIFT

(11) **EP 1 231 025 B1**
(45) Veröffentlichungstag und Bekanntmachung des Hinweises auf die Patenterteilung: **27.10.2004**
(21) Anmeldenummer: 02002490.7
(22) Anmeldetag: 02.02.2002
(51) Int. Cl.: B25B 5/12

(54) **Kniehebelspannvorrichtung**
Toggle lever clamping device
Dispositif de serrage a genouillère

(30) Priorität: 08.02.2001 DE 20102184 U
(43) Veröffentlichungstag der Anmeldung: 14.08.2002
(73) Patentinhaber: TÜNKERS MASCHINENBAU GmbH, D-40880 Ratingen (DE)
(72) Erfinder: Tünkers, Josef-Gerhard, 40878 Ratingen (DE)
(74) Vertreter: Beyer, Rudi

(56) Entgegenhaltungen:
- EP-A- 0 503 193
- EP-A- 1 048 412
- DE-A- 2 222 686
- DE-U- 20 004 406
- US-A- 3 565 415
- US-A- 5 118 088

## Beschreibung

Die Erfindung betrifft eine Kniehebelspannvorrichtung zur Verwendung im Karosseriebau der Kfz-Industrie, mit einem Spannkopf und einem sich daran anschließenden Antriebszylinder, in dem ein zum Beispiel abwechselnd beidseitig durch Druckluft zu beaufschlagender Kolben längsverschieblich und dichtend geführt ist, der mit einer Kolbenstange verbunden ist, die über einen in einem von dem Spannkopf umschlossenen Innenraum vorhandenen Kniehebelgelenkanordnung einen Spannarm um eine gehäusefeste Achse bewegt.

Kniehebelspannvorrichtungen gemäß der vorausgesetzten Gattung sind vorbekannt (G 91 04 532.0)

Bekannt ist es auch, die sogenannten Spannköpfe an Kniehebelspannvorrichtungen aus zwei Schalen auszubilden, die flächig aufeinanderliegen und im wesentlichen staub- und flüssigkeitsdicht miteinander verbunden werden. Diese schalenförmigen Teile umschließen die im Inneren des so gebildeten Spannkopfes angeordnete Kniehebelspannvorrichtung, über die mittels der Kolbenstange ein Spannarm durch Druckmittelbeaufschlagung des Kolbens angetrieben wird (EP 0 769 353 B1)

Sämtliche Kniehebelspannvorrichtungen besitzen einen Antriebszylinder, der zum Beispiel aus einem nahtlos gezogenen Rohr besteht und mit dem Spannkopf durch Schrauben oder dergleichen verbunden ist. Dem Antriebszylinder sind auch geeignete Anschlüsse zum Zuführen des Druckmittels, insbesondere Druckluft, zugeordnet.

Vorbekannt ist es auch, die Stellung des Spannarmes (indirekt) über die Stellung der Kolbenstange bzw. des Kolbens durch sogenannte Sensoren zu bestimmen und diese Werte fernanzuzeigen. Die Sensoren können als Mikroschalter, Druckluftschalter, Induktionsschalter oder dergleichen ausgebildet sein, die durch geeignete Mittel, zum Beispiel sogenannte Fahnen, die mit der Kolbenstange, dem Kolben oder dergleichen, verbunden sind, bedämpft werden (EP 0 636 449 B1).

Tritt Verschleiß auf, muß der gesamte Antriebszylinder nachgearbeitet oder ausgetauscht werden. Reparaturarbeiten am Kolben und/oder Antriebszylinder sind dadurch aufwendig, da dann die betreffende Kniehebelspannvorrichtung zerlegt werden muss.

Aus der US-A-3,565,415 ist eine Kniehebelspannvorrichtung vorbekannt, die über einen abwechselnd beidseitig durch Druckmitteldruck zu beaufschlagenden Kolben über eine Kolbenstange eine Kniehebelgelenkanordnung antreibt, mit der ein Spannarm gelenkbeweglich verbunden ist, der ein Werkstück zwischen ihm und einer Verlängerung des Zylindergehäuses einklemmt. Diese Verlängerung befindet sich auf der der Kniehebelgelenkanordnung entgegengesetzten Seite des Zylindergehäuses und bildet zusammen mit einem Teil des Zylindergehäuses eine Art Grundplatte. In dem eigentlichen Antriebszylinder ein hülsenförmiger Körper gelagert, in dem der Kolben anscheinend längsverschieblich und dichtend geführt ist. Der Spannarm verläuft in Ruhestellung mit seiner Längsachse annähernd parallel zur Längsachse der Kolbenstange und ist über eine im mittleren Längenbereich des Zylinders und oberhalb der Grundplatte angeordneten Schwenkachse um ein begrenztes Maß schwenkbeweglich durch einen Längsschlitz gelagert, mit dem der Spannarm auf der Schwenkachse gleit- und schwenkbeweglich angeordnet ist. Der Schwenkarm und ein Teil der Kniehebelgelenkanordnung sowie der mit der Kniehebelgelenkanordnung gelenkbeweglich verbundene vordere Teil der Kolbenstange werden durch eine Abdeckhaube übergriffen.

Der Erfindung liegt die Aufgabe zugrunde, Kniehebelspannvorrichtungen der vorausgesetzten Art baueinfacher zu gestalten und sie wartungsfreundlicher auszubilden. Die Aufgabe wird durch die in **Patentanspruch 1** beschriebenen Merkmale gelöst.

Bei der Erfindung ist der Antriebszylinder ein mehrteiliges, insbesondere zweiteiliges Bauteil, das die als Zylinder dienende eigentliche Laufhülse für den Kolben hält und umschließt. Da dieser Antriebszylinder mehrteilig ist, insbesondere aus zwei halbschalenförmigen Teilen besteht, läßt er sich einfach und schnell zerlegen, um zum Beispiel die verschlissene Laufhülse auszuwechseln und/oder am Kolben auch Wartungsarbeiten, zum Beispiel an der Kolbendichtung, vornehmen zu können. Die Zylinderteile können dabei mit Flanschen dicht aufeinander liegen, so daß die eigentliche Laufhülse gegen Staub und Feuchtigkeit und gegen mechanische Einflüsse geschützt ist. Dadurch ergibt sich eine sehr kompakte Ausführungsform, zumal die Haltezylinderteile formmäßig den Konturen der Laufhülse angepaßt sind, zum Beispiel entsprechend der Kontur der Laufhülse - zumindest an ihrer der Laufhülse zugekehrten Oberflächenteile - kreisrund oder flachoval ausgebildet werden können. Wenn in diesem Zusammenhang von "flachovalen" Zylindern die Rede ist, werden hierunter bevorzugt solche Zylinderformen verstanden, bei denen in jedem zur Längsachse orthogonal geführten Querschnitt zwei längere, gegenüberliegende Wände parallel zueinander verlaufen, die an ihren Enden durch je einen Kreisbogen einstückig miteinander verbunden sind. Somit ähnelt diese flachovale Form eher einer rechteckigen Querschnittsform als einer Ovalform, mit dem Unterschied, daß an den Schmalseiten Kreisbogen vorhanden sind. Selbstverständlich ist in solchem Falle auch der Kolben entsprechend gestaltet, was auch für die Kolbendichtungen gilt, die an der Innenseite einer solchermaßen gestalteten flachovalen Laufbüchse dichtend geführt sind.

In den **Patentansprüchen 2** bis **11** sind weitere erfinderische Ausgestaltungen beschrieben.

Die Ausführung nach **Patentanspruch 2** ermöglicht eine gute formschlüssige Verbindung und damit auch Krafteinleitung in die Wände der Haltezylinderteile, die den betreffenden Antriebszylinder bilden, da diese mit formmäßig angepassten Ausformungen die Laufhülse formschlüssig umschließen.

In den **Patentansprüchen 3** und **4** sind unterschiedliche Querschnittsformen für die Laufhülse, nämlich solche von flachovaler und von kreisrunder Querschnittsform beschrieben, wobei flachoval entsprechend der in dieser Beschreibung verwendeten Definition zu verstehen ist.

Bei der Ausführungsform nach **Patentanspruch 5** werden die relativ empfindlichen Innenteile, wie Laufhülse einerseits, aber auch die Kniehebelgelenkanordnung, deren Hebel und Schwenkachsen gegen Verschmutzungen zuverlässig geschützt.

Gemäß **Patentanspruch 6** sind der Spannkopf und der Antriebszylinder in der gleichen Ebene längsgeteilt und bestehen jeweils aus zwei Hälften, die in der Teilungsebene flächend und dichtend aufeinander liegen.

Besonders vorteilhaft ist es, wenn gemäß **Patentanspruch 7** die jeweils zusammengehörigen Spannkopfteile und die zugehörigen Teile des Antriebszylinder einstückig, insbesondere materialmäßig einstückig, miteinander verbunden sind.

Bei der Ausführungsform nach **Patentanspruch 8** sind Sensoren, die die Stellung der Kolbenstange und damit - indirekt - die Stellung des Spannarmes anzeigen, dem Spannarmkopf zugeordnet, derart, dass die die Abfragung vornehmenden Sensoren (Mikroschalter, induktive Schalter, Druckluftschalter) zu einer Kassette zusammengefasst sind, die in einem Schlitz, insbesondere an der dem Spannarm gegenüberliegenden Seite, angeordnet sind, wobei sich der Längsschlitz in Längsachsrichtung der Kolbenstange erstreckt, in den die Kassette passend sowie bevorzugt staub- und feuchtigkeitsdicht, eingreift. Gemäß **Patentanspruch 9** ist der Schlitz derart ausgebildet, dass er je zur Hälfte in einer der Teile (Hälften) der Spannkopfteile zu liegen kommt, somit von der Teilungsebene ausgehend zu beiden Seiten symmetrisch angeordnet ist.

**Patentansprüche 10** und **11** beschreiben vorteilhafte Ausführungsformen.

In der Zeichnung ist die Erfindung - teils schematisch - an einem Ausführungsbeispiel veranschaulicht. Es zeigen:

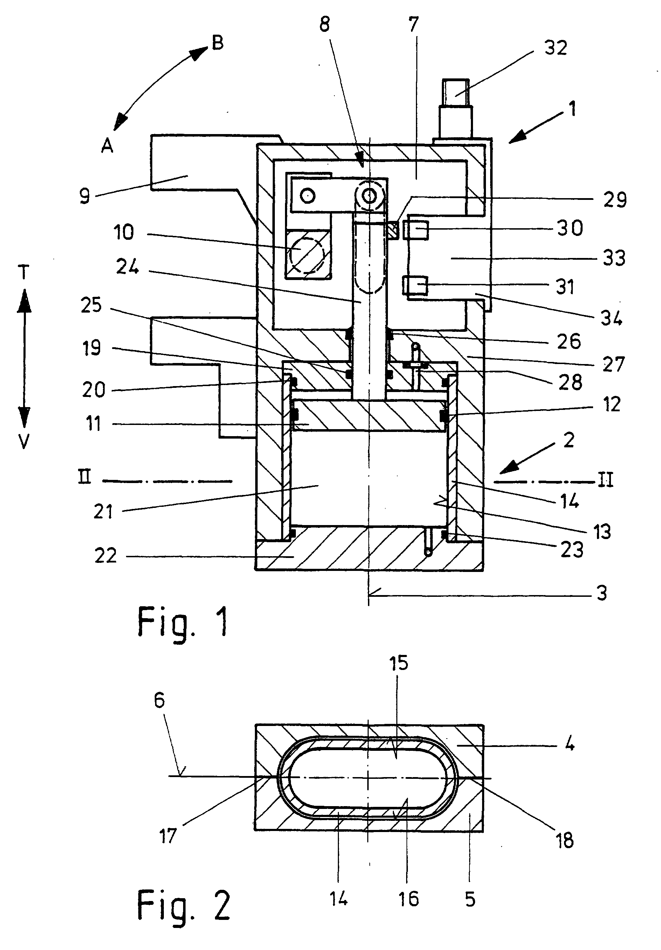

- Fig. 1: eine Kniehebelspannvorrichtung gemäß der Erfindung im Axiallängsschnitt, teils in der Seitenansicht, und
- Fig. 2: einen Querschnitt nach der Linie II - II der Fig. 1.

Mit dem Bezugszeichen 1 ist insgesamt ein Spannkopf und mit dem Bezugszeichen 2 ein Antriebszylinder bezeichnet. Sowohl der Spannkopf 1 als auch der Antriebszylinder 2 sind in Richtung der Längsachse 3 in zwei gleiche Hälften 4 und 5 unterteilt, also längsgeteilt, wobei die Teilungsebene 6 zentrisch durch die Längsachse 3 verläuft. Die beiden Hälften 4 und 5 des Spannkopfes 1 und der Antriebszylinder 2 sind materialmäßig einstückig oder funktionell einstückig ausgebildet, zum Beispiel miteinander verschraubt, versplintet oder geklebt.

Der Spannkopf 1 umschließt einen Innenraum 7, in dem eine Kniehebelgelenkanordnung 8 vorhanden ist, über die ein Spannarm 9 um eine gehäusefeste Achse 10 in Richtung A bzw. B durch abwechselnde Druckmitteldruckbeaufschlagung, insbesondere durch Beaufschlagung mit Druckluft eines Kolbens 11, bewegbar ist.

Der Kolben 11 ist durch eine Dichtung 12 längsverschieblich und dichtend an der Innenwand 13 einer Laufhülse 14 geführt, die von den Hälften 4 und 5 des Antriebszylinder 2 umschlossen ist. Die Laufhülse 14 ist in einem orthogonal zu ihrer Längsachse 3 geführten Querschnitt flachoval ausgebildet; sie kann aber auch außen und innen kreisrund sein. Die den Außenwänden der Laufhülse 14 zugekehrten Wände der Hälften 4 und 5 sind mit den Außenwänden der Laufhülse 14 formmäßig angepaßten Ausformungen 15 bzw. 16 versehen, so daß die Hälften 4 und 5 die Laufhülse 14 formschlüssig umschließen. Die Hälften 4, 5 liegen mittels Flanschen 17 und 18 dicht aufeinander und sind durch nicht dargestellte Schrauben z. B. staub- und flüssigkeitsdicht miteinander verbunden, was auch für den oberen Bereich, also im Bereich des Spannkopfes 1, gilt.

Die Laufhülse 14 ist stirnendseitig an dem einen Ende durch einen Kopfdeckel 19 axial unverschieblich gelagert, der durch eine Dichtung 20 den Innenraum 21 der Laufhülse 14 druckmitteldicht abdichtet.

Am entgegengesetzten Ende ist die Laufhülse 14 durch einen Bodendeckel 22 arretiert, dem ebenfalls eine Dichtung 23 zugeordnet ist.

Dem Antriebszylinder 2 sind geeignete, im einzelnen nicht dargestellte Zuführkanäle zum abwechselnden Zuführen von Druckmittel auf die eine oder andere Seite des Kolbens 11 zugeordnet.

Mit dem Kolben 11 ist außerdem eine Kolbenstange 24 verbunden, die über Dichtungen 25 bzw. 26 sowohl in dem Kopfdeckel 19 als auch in einer Wand 27, die mit der jeweiligen Hälfte 4 oder 5 verbunden ist, längsverschieblich und dichtend geführt ist.

Bei 28 ist ein Druckmittelkanal im Kopfdeckel 19 zum Zuführen des Druckmittels schematisch angedeutet.

Der Kolbenstange 24 ist eine Schaltfahne 29 zugeordnet, die abwechselnd induktive Schalter, Druckmittelschalter oder Mikroschalter 30 und 31 bedämpft. Die dadurch hervorgerufenen Signale werden über ein Steckergehäuse 32 abgefragt und fernangezeigt (nicht dargestellt). Das Steckergehäuse 32 ist mit einer als Kassette ausgebildeten Kassettenhalterung 33 verbunden, die als Blechkonstruktion oder dgl. ausgebildet ist und in einen dem Spannarm 9 gegenüberliegenden, also an der Rückseite vorhandenen Längsschlitz 34 passend und damit fugendicht eingreift und somit ebenfalls den Innenraum 7 des Spannkopfes 1 gegen Staub und Feuchtigkeit abdichtet. Der Längsschlitz 34, der die Kassette 33 aufnimmt, erstreckt sich in Richtung der Längsachse 3 und ist auf beide Hälften 4 und 5 gleichmäßig, somit symmetrisch, verteilt angeordnet. Im Bedarfsfalle kann dieser Längsschlitz aber auch an anderen Stellen des Spannkopfes vorgesehen werden, zum Beispiel an der Vorderseite und ebenso symmetrisch in Bezug auf die beiden Hälften 4 und 5 angeordnet werden.

Wenn von Hälften 4, 5 gesprochen ist, so kann es sich auch um eine andere als genau hälftige Aufteilung, zum Beispiel um eine mehrteilige Aufteilung handeln. Des weiteren ist es möglich, die Teile 4 und 5 nicht mathematisch identisch zu gestalten.

Die aus der Zeichnung ersichtliche Kniehebelspannvorrichtung kann an einer geeigneten Vorrichtung, zum Beispiel an einem Roboterarm schwimmend angeordnet sein, und zwar derart, daß sie durch abwechselnd beidseitigen Druckmitteldruck, insbesondere Druckluftbeaufschlagung eines nicht dargestellten Antriebszylinders, in Richtung der Längsachse 3 hubverstellbar und in der jeweils angesteuerten Position auch arretierbar ist. Es ist weiterhin möglich, die Kniehebelspannvorrichtung auch um eine quer zur Längsachse 3 verlaufende Kipp- bzw. Schwenkachse schwenkbeweglich anzuordnen. Auch diese Schwenk- bzw. Kippbewegung kann durch Druckmittelbeaufschlagung eines geeigneten Antriebszylinders (gleichfalls nicht dargestellt) gesteuert werden. Auf diese Weise ist es möglich, miteinander zu verspannende Teile besser zu erreichen und zu greifen und die Vorrichtung auch über komplizierte Konturen hinwegzusteuern, um sie zum Beispiel im Zusammenwirken mit einer Laserstrahlschweißanlage zu verwenden.

Die gesamte Kniehebelspannvorrichtung kann durch einen nicht dargestellten, abwechselnd beidseitig durch Druckmitteldruck, insbesondere durch Luftdruck, zu beaufschlagenden Antriebszylinder auch in begrenztem Maße in Richtung V bzw. T, also in Richtung der Längsachse 3 hubbeweglich angeordnet und/oder um eine orthogonal zur Längsachse 3 nicht dargestellte Achse auch durch einen weiteren abwechselnd mit Druckmitteldruck, insbesondere durch Luftdruck, zu beaufschlagenden Antriebszylinder auch kippbeweglich angeordnet sein, zum Beispiel an einem Roboterarm, um die Spannbacken um Blechkonturen oder dergleichen herumfahren zu können.

### Bezugszeichenliste

- 1: Spannkopf
- 2: Antriebszylinder
- 3: Längsachse
- 4: Hälfte, Teil
- 5: " ' "
- 6: Teilungsebene
- 7: Innenraum
- 8: Kniehebelgelenkanordnung
- 9: Spannarm
- 10: Achse
- 11: Kolben
- 12: Dichtung
- 13: Innenwand
- 14: Laufhülse
- 15: Ausformung
- 16: "
- 17: Flansch
- 18: "
- 19: Kopfdeckel
- 20: Dichtung
- 21: Innenraum
- 22: Bodendeckel
- 23: Dichtung
- 24: Kolbenstange
- 25: Dichtung
- 26: "
- 27: Wand
- 28: Druckmittelkanal
- 29: Schaltfahne
- 30: Mikroschalter, induktiver Schalter, Druckluftschalter
- 31: " ' " " ' "
- 32: Steckergehäuse
- 33: Kassettenhalterung, Kassette
- 34: Längsschlitz
- A: Schwenkrichtung des Spannarmes 9
- B: " " "

## Patentansprüche

1. Kniehebelspannvorrichtung zur Verwendung im Karosseriebau der Kfz-Industrie, mit einem Spannkopf (1) und einem sich daran anschließenden Antriebszylinder (2), in dem ein zum Beispiel abwechselnd beidseitig durch Druckluft zu beaufschlagender Kolben (11) längsverschieblich und dichtend geführt ist, der mit einer Kolbenstange (24) verbunden ist, die über eine in einem von dem Spannkopf (1) umschlossenen Innenraum (7) vorhandene Kniehebelgelenkanordnung (8) einen Spannarm (9) um eine gehäusefeste Achse (10) bewegt, wobei der Antriebszylinder (2) aus zwei in Richtung seiner Längsachse aufgeteilten Haltezylinderteilen (4, 5) besteht, die mit Flanschen dicht aufeinander liegen und durch Befestigungsmittel miteinander verbunden sind und die eine als Laufhülse (14) ausgebildete Zylinderhülse umschließen, in der der Kolben (11) geführt ist.

2. Kniehebelspannvorrichtung nach Anspruch 1, **dadurch gekennzeichnet, dass** die Haltezylinderteile (4, 5) formmäßig den Konturen der Laufhülse (14) angepasst sind, derart, dass sie die den Außenwänden der Laufhülse (14) zugekehrten Wände der Haltezylinderteile (4, 5) mit den Außenwänden der Laufhülsen (14) formmäßig angepassten Ausformungen (15, 16) versehen sind, so dass die Haltezylinderteile (4, 5) die Laufhülse (14) formschlüssig umschließen.

3. Kniehebelspannvorrichtung nach Anspruch 1 oder 2, **dadurch gekennzeichnet, daß** die Laufhülse (14) in einem orthogonal zu ihrer Längsachse geführten Querschnitt flachoval ausgebildet ist.

4. Kniehebelspannvorrichtung nach Anspruch 1 oder 2, **dadurch gekennzeichnet, dass** die Laufhülse (14) in einem orthogonal zu ihrer Längsachse geführten Querschnitt kreisrund ausgebildet ist.

5. Kniehebelspannvorrichtung nach Anspruch 1 oder einem der darauffolgenden Ansprüche, **dadurch gekennzeichnet, dass** die Haltezylinderteile (4, 5) und die Teile des Spannkopfes (1) dicht aufeinanderliegen und durch Schrauben, staub- und flüssigkeitsdicht miteinander verbunden sind.

6. Kniehebelspannvorrichtung nach Anspruch 1 oder einem der darauffolgenden Ansprüche, **dadurch gekennzeichnet, dass** sowohl der Spannkopf (1) als auch der Antriebszylinder (2) in einer gemeinsamen, geradlinig durch die Längsachse (3) der Kniehebelspannvorrichtung verlaufenden Ebene in zwei Hälften aufgeteilt sind, die in der Teilungsebene flächig und dichtend aufeinanderliegen.

7. Kniehebelspannvorrichtung nach Anspruch 6, **dadurch gekennzeichnet, daß** die jeweils in Längsachsrichtung gegenüberliegenden Teile des Spannkopfes (1) und des Antriebszylinders (2) einstückig - materialmäßig einstückig oder funktionell einstückig - miteinander verbunden sind.

8. Kniehebelspannvorrichtung nach Anspruch 1 oder einem der darauffolgenden Ansprüche, **dadurch gekennzeichnet, daß** die die Stellung der Kolbenstange (24) anzeigenden (abfragenden) Mikroschalter, induktive Schalter oder Druckluftschalter (30, 31) zu einem auswechselbaren Bauteil (Kassette 33) zusammengefaßt sind, die in einem parallel zur Längsachse (3) der Kolbenstange (24) verlaufenden Längsschlitz (34), insbesondere an der dem Spannarm (9) gegenüberliegenden Seite angeordnet sind, wobei die Kassette (33) in den Schlitz formmäßig passend eingreift.

9. Kniehebelspannvorrichtung nach Anspruch 8, **dadurch gekennzeichnet, daß** die Länge des Schlitzes nur einen Bruchteil der Länge des Spannkopfes (1), zum Beispiel nur ein Viertel bis ein Drittel der Spannkopflänge, beträgt.

10. Kniehebelspannvorrichtung nach Anspruch 1 oder einem der darauffolgenden Ansprüche, **dadurch gekennzeichnet, daß** die Laufhülse (14) an dem einen Ende durch einen Bodendeckel (22) zentriert ist, der mit einem formmäßig der Innenkontur der Laufhülse (14) angepaßten Längenabschnitt in die Laufhülse (14) eingreift, wobei die Laufhülse (14) an ihrem dem Bodendeckel (22) entgegengesetzten Endabschnitt über einen ebenfalls mit einem formmäßig dem Innenquerschnitt der Laufhülse (14) angepaßten Längenabschnitt in diese eingreift und zentriert.

11. Vorrichtung mit einer Kniehebelspannvorrichtung nach Anspruch 1 oder einem der darauffolgenden Asprüche, **dadurch gekennzeichnet, daß** die Kniehebelspannvorrichtung schwimmend an der vorrichtung, zum Beispeil an einem Roboterarm, angeordnet ist, derart, daß sie in ihrer Längsachsrichtung in beiden Richtungen Kraftgesteuert hubverstellbar und/oder um eine quer zu ihrer Längsachse (3) gerichtete Schwenk-bzw. Kippachse auch kraftgesteuert Kippbar ist.

## Claims

1. Toggle lever clamping device for use in bodymaking in the automobile industry, with a clamping head (1) and a driving cylinder (2) connected to it, in which driving cylinder a piston (11) is guided in such a way as to be longitudinally displaceable and to form a seal, to which piston pressure is to be applied, for example, alternately on both sides and which piston is connected to a piston rod (24) which via a toggle lever arrangement (8) in a chamber enclosed by the clamping head (1) moves a clamping arm (9) about an axle (10) fastened to the housing, where the driving cylinder (2) comprises two holding cylinder parts (4, 5) which are divided along its longitudinal axis, which holding cylinder parts lie tightly one on the other with flanges and are connected together by fastening means and which enclose a cylinder sleeve constructed as a running sleeve (14) in which the piston is guided.

2. Toggle lever clamping device in accordance with claim 1, **characterised In that** the holding cylinder parts (4, 5) are adapted in form to match the contours of the running sleeve (14) in such a way that the walls of the holding cylinder parts (4, 5) facing the outer walls of the running sleeve (14) are provided with mouldings (15, 16) which are adapted in form to match the outer walls of the running sleeves (14) in such a way that the holding cylinders (4, 5) positively enclose the running sleeve (14).

3. Toggle lever clamping device in accordance with claim 1 or 2, **characterised in that** the running sleeve (14) is constructed half-oval in a cross-section set at right angles to its longitudinal axis.

4. Toggle lever device in accordance with claim 1 or 2, **characterised in that** the running sleeve (14) is constructed circular in a cross-section set at right angles to its longitudinal axis.

5. Toggle lever clamping device in accordance with claim 1 or one of the claims following it, **characterised in that** the holding cylinder parts (4, 5) and the parts of the clamping head (1) lie tightly one on the other and are connected to one another with screws in such a way as to be dust- and liquid-tight.

6. Toggle lever clamping device in accordance with claim 1 or one of the claims following it, **characterised in that** both the clamping head (1) and the driving cylinder (2) are divided into two halves in a common plane running in a straight line through the longitudinal axis (3) of the toggle lever clamping device, which two halves lie one on the other full-surface and in such a way as to form a seal.

7. Toggle lever clamping device in accordance with claim 6, **characterised in that** in each case the parts of the clamping head (1) and the driving cylinder (2) opposite each other in the longitudinal direction are connected to each other to form a single part either materially or functionally.

8. Toggle lever clamping device in accordance with claim 1 or one of the claims following it, **characterised in that** the microswitches, inductive switches or compressed air switches (30, 31) indicating (enquiring) the position of the piston rod (24) are combined to form an interchangeable component (cassette 33), which microswitches, inductive switches or compressed air switches are, particularly on the side opposite the clamping arm (9), arranged in a longitudinal slot (34) running parallel to the longitudinal axis (3) of the piston rod (24), where the cassette (33) is shaped to fit the slot exactly.

9. Toggle lever clamping device in accordance with claim 8, **characterised in that** the length of the slot is equal to only a fraction of the length of the clamping head (1), for example, to between only a quarter and a third of the length of the clamping head.

10. Toggle lever clamping device in accordance with claim 1 or one of the claims following it, **characterised in that** the running sleeve (14) is centred at one end by a base cover (22) which engages in the running sleeve (14) by a longitudinal portion which is adapted in form to match the inner contour of the running sleeve (14), where the running sleeve (14) at its end portion opposed to the base cover (22) engages in the running sleeve and is centred via a longitudinal portion also adapted in form to match the inner cross-section of the running sleeve (14).

11. Device with a toggle lever clamping device in accordance with claim 1 or one of the claims following it, **characterised in that** the toggle lever clamping device is arranged on the device in such a way that it floats, for example, on a robot arm, and in such a way that it can be vertically displaced in both directions under power control in its longitudinal direction and/or can also be tilted under power control about a pivoting or tilting axis set at right angles to its longitudinal axis (3).

## Revendications

1. Dispositif de serrage à genouillère, utilisable dans la construction de carrosseries par l'industrie automobile, composé d'une tête de serrage (1) et d'un vérin d'entraînement (2) raccordé à celle-ci, dans lequel un piston (11) pouvant être mis sous pression pneumatique par exemple des deux côtés en alternance coulisse guidé dans le sens longitudinal et tout en étanchant, lequel piston est relié à une tige (24) qui déplace un bras de serrage (9) autour d'un axe (10) solidaire du boîtier, via une articulation de genouillère (8) présente dans un compartiment (7) enfermé dans la tête de serrage (1), sachant que le vérin d'entraînement (2) se compose de deux pièces (4,5) de vérin de retenue partagées dans le sens de son axe longitudinal, lesquelles pièces appliquent de manière étanche l'une sur l'autre avec des brides, et sont reliées ensemble à l'aide de moyens de fixation et enveloppent une douille de vérin en forme de douille mobile (14) dans laquelle le piston (11) est guidé.

2. Dispositif de serrage à genouillère selon la revendication 1, **caractérisé en ce que** les formes des pièces (4, 5) du vérin de retenue sont adaptées aux contours de la douille mobile (14), de telle sorte que les parois des pièces (4,5) du vérin de retenue tournées vers les parois extérieures de la douille mobile (14) sont dotées de cavités (15, 16) dont la forme a été adaptée aux parois extérieures des douilles mobiles (14), de sorte que les pièces (4, 5) du vérin de retenue enserrent la douille mobile (14) avec adhérence des formes.

3. Dispositif de serrage à genouillère selon la revendication 1 ou 2, **caractérisé en ce que** la douille mobile (14) présente une forme ovale aplatie lorsque observée en coupe perpendiculaire à son axe longitudinal.

4. Dispositif de serrage à genouillère selon la revendication 1 ou 2, **caractérisé en ce que** la douille mobile (14) présente une forme circulaire lorsque observée en coupe perpendiculaire à son axe longitudinal.

5. Dispositif de serrage à genouillère selon la revendication 1 ou l'une des revendications suivantes, **caractérisé en ce que** les pièces (4, 5) du vérin de retenue et les pièces de la tête de serrage (1) appliquent de manière étanche les unes sur les autres et sont reliées ensemble par des vis leur conférant une étanchéité à la poussière et aux liquides.

6. Dispositif de serrage à genouillière selon la revendication 1 ou l'une des revendications suivantes, **caractérisé en ce que** tant la tête de serrage (1) que le vérin d'entraînement (2) sont partagés en deux moitiés selon un plan conjoint traversant en ligne droite l'axe longitudinal (3) du dispositif de serrage à genouillère, les surfaces de ces deux moitiés étant en superposition dans le plan de joint et tout en étanchant.

7. Dispositif de serrage à genouillère selon la revendication 6, **caractérisé en ce que** les pièces de la tête de serrage (1) et du vérin d'entraînement (2), se faisant respectivement face dans le sens de l'axe longitudinal, sont reliées monobloc entre elles, monobloc physiquement ou monobloc au plan fonctionnel.

8. Dispositif de serrage à genouillère selon la revendication 1 ou l'une des revendications suivantes, **caractérisé en ce que** les microrupteurs, capteurs inductifs ou capteurs pneumatiques (30, 31) indiquant (détectant) la position de la tige de piston (24) sont rassemblés en un composant interchangeable (une cassette 33) agencé dans une fente longitudinale (34) parallèle à l'axe longitudinal (3) de la tige de piston (24), en particulier sur le côté situé en face du bras de serrage (9), sachant que la cassette (33) engrène dans la fente par concordance des formes.

9. Dispositif de serrage à genouillère selon la revendication 8, **caractérisé en ce que** la longueur de la fente ne représente qu'une fraction de la longueur de la tête de serrage (1), par exemple seulement un quart à un tiers de la longueur de la tête de serrage.

10. Dispositif de serrage à genouillère selon la revendication 1 ou l'une des revendications suivantes, **caractérisé en ce que** la douille mobile (14) est centrée à une extrémité par un couvercle de fond (22), lequel couvercle engrène dans la douille mobile (14) par le biais d'un segment longitudinal dont la forme a été adaptée au contour intérieur de la douille mobile (14), sachant que la douille mobile (14), par son segment opposé au couvercle de fond (22), engrène dans la douille mobile (14) et la centre par le biais d'un segment longitudinal dont la forme a été adaptée à la section intérieure de la douille mobile (14).

11. Dispositif équipé d'un dispositif de serrage à genouillère selon la revendication 1 ou l'une des revendications suivantes, **caractérisé en ce que** le dispositif de serrage à genouillère est agencé de façon flottante contre le dispositif premier cité, par exemple contre un bras de robot, de sorte que, dans le sens de son axe longitudinal, il soit réglable en hauteur dans les deux sens, piloté par une force, et/ou qu'il puisse pivoter, également piloté par une force, autour d'un axe de basculement et/ou de renversement transversalement à son axe longitudinal (3).
